# EUROPEAN PATENT SPECIFICATION

(11) **EP 3 172 066 B1**
(45) Date of publication and mention of the grant of the patent: **29.11.2017**
(21) Application number: 15766599.3
(22) Date of filing: 21.07.2015
(51) Int. Cl.: B60C 1/00, C08J 9/00, C08G 65/40, C08G 101/00, B60C 19/00, B60C 5/00

(54) **TYRE COMPRISING A FOAM MATERIAL FOR SOUND ABSORPTION**
REIFEN MIT EINEM SCHAUMSTOFF ZUR SCHALLABSORPTION
PNEU COMPRENANT UN MATÉRIAU ALVÉOLAIRE PERMETTANT L'ABSORPTION ACOUSTIQUE

(30) Priority: 21.07.2014 IT RM20140404
(43) Date of publication of application: 31.05.2017
(73) Proprietor: Bridgestone Corporation, Tokyo 104-8340 (JP)
(72) Inventor: SECCHI, Barbara Maria, I-00144 Roma (IT); AGORETTI, Pasquale, I-00040 Ariccia (IT); AMURRI, Michele, I-00122 Roma (IT); HOUSE, John, I-00128 Roma (IT)
(74) Representative: Marchetti, Alessio
(86) International application number: PCT/IB2015/055525
(87) International publication number: WO 2016/012946

(56) References cited:
- EP-A1- 2 457 720
- EP-A2- 0 367 556
- WO-A1-2010/000789
- DE-A1-102012 102 418
- DE-C2- 3 042 350
- US-A1- 2001 004 924
- US-A1- 2014 193 322

## Description

### TECHNICAL FIELD

The present invention relates to a tyre comprising a foam material for sound absorption. More precisely, the present invention relates to a tyre comprising a foam material housed in the inner cavity covered by a layer impermeable to air and filled with air under pressure.

### BACKGROUND ART

One of the noises produced by a tyre in service regards the resonance cavity sound generated by vibration of the air under pressure inside the inner cavity of the tyre. To reduce this type of noise, the use of a porous material applied to the surface of the impermeable layer of the tyre's inner cavity in a manner such that the resonance cavity sound is absorbed by the porous material has long been known.

The porous material most commonly used for this purpose is polyurethane. However, despite having satisfactory properties in terms of sound absorption, polyurethane-based foam materials suffer from the drawback of being easily inflammable.

The need was thus felt to replace the polyurethane-based foam material with another foam material that, even though having the same performance in terms of sound absorption, did not suffer from the above-mentioned drawback.

The applicant has surprisingly found that the polyurethane-based foam material can be replaced with a foam material based on polyphenolic polycondensates of natural or synthetic origin, which has proved to be just as efficient in terms of sound absorption, but without having the above-mentioned inherent drawback of polyurethane-based materials.

EP0367556A2 discloses a pneumatic tyre having an inner liner disposed on the inner surface of the tyre main body and the inner liner comprises a porous damper layer facing the interior of the tyre to damp noise resonance to reduce road noise.

US2001004924 A2 discloses a tyre noise reducing system comprising a wheel rim, a pneumatic tyre to be mounted on the wheel rim to form an annular tyre hollow, and a noise damper to be disposed in the annular tyre hollow, wherein the noise damper is a liquid under use conditions.

DE102012102418 A1 discloses a pneumatic vehicle tyre comprising a heat insulating layer in the form of a foamed- and open-cell material with air spaces arranged on a tyre rim-inner side.

### DISCLOSURE OF INVENTION

The subject of the present invention is a tyre comprising an impermeable layer suitable to ensure the sealing under pressure of the air contained in the inner cavity of the carcass and a foam material housed inside said inner cavity; said tyre being characterized in that said foam material is based on a polycondensate of polyphenolic compounds.

Preferably, said foam material is based on flavonoid tannins.

Preferably, said foam material is prepared starting from flavonoid tannins, furfuryl alcohol, a foaming agent and a catalyst.

Preferably, said foam material is totally formaldehyde-free.

The absence of formaldehyde ensures that the foam material has advantages related to the reduced usage of noxious substances and greater flexibility.

Preferably, said foam material has a density ranging from 0.01 to 0.25 g/cm³.

Preferably, the foam material occupies a volume ranging from 0.1% to 100% of the volume of the inner cavity. More preferably, the foam material has a thickness ranging from 10mm to 200mm and a width ranging from 10% to 100% of the width of the inner cavity.

Preferably, the foam material occupies a volume ranging from 0.4% to 20% of the volume of the inner cavity. More preferably, the foam material has a thickness ranging from 20mm to 30mm and a width ranging from 20% to 40% of the width of the inner cavity.

Preferably, said foam material is housed on an inner surface of the impermeable layer of the inner cavity of the tyre.

Preferably, the foam material can be housed in the cavity in the form of a toroid, or in the form of a strip with a length equal to that of the impermeable layer, or in the form of single segments assembled so as to cover the entire length of the impermeable layer.

### BEST MODE FOR CARRYING OUT THE INVENTION

An embodiment is described below by way of non-limitative example.

The applicant has performed a comparison in terms of sound absorption and inflammability between a polyurethane-based foam material normally used in tyres and a foam material based on flavonoid tannins according to the present invention.

The polyurethane-based foam material is marketed under the brand name Metzonor 023 and is produced by Metzler Schaum GMBH.

The foam material based on flavonoid tannins according to the present invention is produced by a synthesis reaction in which formaldehyde is not used, and has an apparent density of 0.028 g/cm³ and an average cell diameter of 250 micron.

The sound absorption test was performed according to the ISO 10534-2 Standard at a frequency ranging from 200 to 2000 Hz; the inflammability test was carried out by bringing the material in contact with a flame at a temperature of approximately 500°C and calculating the contact time necessary for combustion of the material to become self-sustaining.

From the sound absorption tests, it was observed that the performance of the two foam materials is the same in terms of sound absorption.

From the inflammability tests, it was observed that while the polyurethane-based foam material needs only two seconds in contact with the flame to continue with self-sustaining combustion, the foam material according to the present invention does not exhibit self-sustaining combustion phenomena even if contact with the flame is maintained for a prolonged time.

The aging tests were carried out in an oven for three days at 70°C, after which the sound absorption tests were performed. The results are indicated in terms of percentage variation with respect to the sound absorption coefficient of non-aged samples. The foams forming the subject of the present invention show the same absorption coefficient before and after aging, while the reference foams show a drop of 10% in the coefficient after aging.

It has been observed that if made in the absence of formaldehyde, the foam material has greater flexibility for the same power of absorption. Therefore, the absence of formaldehyde not only entails safety advantages, as formaldehyde is a toxic compound, but also ensures more efficient utilization of the foam material according to the present invention. As will be immediately evident to a person skilled in the field, the more the foam material is flexible, the more its positioning inside the inner cavity of the carcass will be secure and effective. In fact, the greater flexibility of the foam material can ensure that breakage does not occur during its manipulation as well as its more effective placement inside the inner cavity of the carcass.

To summarize, as well as ensuring performance in terms of sound absorption comparable to that of polyurethane-based foam material, the foam material used in tyres according to the present invention has the advantages of having high flame resistance, a high level of infusibility and greater aging resistance.

Furthermore, for a more complete assessment of the advantages of the present invention, it should be considered that the foam material use in tyres according to the present invention can be obtained from raw materials of natural origin and without the use of formaldehyde (classified as a type 2 carcinogenic with type 3 acute toxicity). Once again, it should be underlined how the absence of formaldehyde, in addition to ensuring advantages in terms of safety, also ensures greater flexibility of the related foam material with the associated advantages indicated above.

## Claims

1. A tyre comprising an impermeable layer suitable to ensure the sealing under pressure of the air contained in the inner cavity of the carcass and a foam material housed inside said inner cavity; said tyre being **characterized in that** said foam material is based on a polycondensate of polyphenolic compounds.

2. A tyre according to claim 1, **characterized in that** said foam material is based on flavonoid tannins.

3. A tyre according to claim 2, **characterized in that** said foam material is prepared starting from flavonoid tannins, furfuryl alcohol, a foaming agent and a catalyst.

4. A tyre according to any of the previous claims, **characterized in that** said foam material is formaldehyde-free.

5. A tyre according to any of the previous claims, **characterized in that** said foam material has a density ranging from 0.01 g/cm³ to 0.25 g/cm³.

6. A tyre according to any of the previous claims, **characterized in that** said foam material occupies a volume ranging from 0.1% to 100% of the volume of the inner cavity.

7. A tyre according to claim 6, **characterized in that** said foam material has a thickness ranging from 10mm to 200mm and a width ranging from 10% to 100% of the width of the inner cavity.

8. A tyre according to any of the previous claims, **characterized in that** said foam material occupies a volume ranging from 0.4% to 20% of the volume of the inner cavity.

9. A tyre according to claim 8, **characterized in that** said foam material has a thickness ranging from 20mm to 30mm and a width ranging from 20% to 40% of the width of the inner cavity.

10. A tyre according to any of the previous claims, **characterized in that** said foam material is housed on a surface of the impermeable layer of the inner cavity of said tyre.

11. A tyre according to any of the previous claims, **characterized in that** said foam material is housed in the cavity in the form of a toroid, or in the form of a strip with a length equal to that of the impermeable layer, or in the form of single segments assembled so as to cover the entire length of the impermeable layer.

## Patentansprüche

1. Reifen, umfassend eine undurchlässige Schicht, geeignet, um die Versiegelung unter Druck der in dem inneren Hohlraum der Karkasse enthaltenen Luft und eines im Inneren des Hohlraums untergebrachten Schaumstoffs zu gewährleisten; wobei der Reifen **dadurch gekennzeichnet ist, dass** das Schaumstoffmaterial auf einem Polykondensat von Polyphenolmischungen basiert ist.

2. Reifen nach Anspruch 1, **dadurch gekennzeichnet, dass** das Schaumstoffmaterial auf Flavonoidtanninen basiert ist.

3. Reifen nach Anspruch 2, **dadurch gekennzeichnet, dass** das Schaumstoffmaterial ausgehend von Flavonoidtanninen, Furfurylalkohol, einem Schäumungsmittel und einem Katalysator zubereitet wird.

4. Reifen nach einem der vorstehenden Ansprüche, **dadurch gekennzeichnet, dass** das Schaumstoffmaterial formaldehydfrei ist.

5. Reifen nach einem der vorstehenden Ansprüche, **dadurch gekennzeichnet, dass** das Schaumstoffmaterial eine Dichte im Bereich von 10 kg/m³ bis 250 kg/m³ (von 0,01 g/cm³ bis 0,25 g/cm³) aufweist.

6. Reifen nach einem der vorstehenden Ansprüche, **dadurch gekennzeichnet, dass** das Schaumstoffmaterial ein Volumen im Bereich von 0,1 % bis 100 % des Volumens des inneren Hohlraums einnimmt.

7. Reifen nach Anspruch 6, **dadurch gekennzeichnet, dass** das Schaumstoffmaterial eine Dicke im Bereich von 10 mm bis 200 mm und eine Breite im Bereich von 10 % bis 100 % der Breite des inneren Hohlraums aufweist.

8. Reifen nach einem der vorstehenden Ansprüche, **dadurch gekennzeichnet, dass** das Schaumstoffmaterial ein Volumen im Bereich von 0,4% bis 20% des Volumens des inneren Hohlraums einnimmt.

9. Reifen nach Anspruch 8, **dadurch gekennzeichnet, dass** das Schaumstoffmaterial eine Dicke im Bereich von 20 mm bis 30 mm und eine Breite im Bereich von 20 % bis 40 % der Breite des inneren Hohlraums aufweist.

10. Reifen nach einem der vorstehenden Ansprüche, **dadurch gekennzeichnet, dass** das Schaumstoffmaterial auf einer Oberfläche der undurchlässigen Schicht auf dem inneren Hohlraum des Reifens untergebracht ist.

11. Reifen nach einem der vorstehenden Ansprüche, **dadurch gekennzeichnet, dass** das Schaumstoffmaterial in dem Hohlraum in der Form eines Toroids oder in der Form eines Streifens mit einer Länge gleich der der undurchlässigen Schicht, oder in der Form einzelner Segmente, derart zusammengesetzt, um die gesamte Länge der undurchlässigen Schicht zu bedecken, untergebracht ist.

## Revendications

1. Pneumatique comprenant une couche imperméable appropriée pour garantir l'étanchéité sous pression de l'air contenu dans la cavité interne de la carcasse et un matériau en mousse logé à l'intérieur de ladite cavité interne ; ledit pneumatique étant **caractérisé en ce que** ledit matériau en mousse est basé sur un polycondensat de composés polyphénoliques.

2. Pneumatique selon la revendication 1, **caractérisé en ce que** ledit matériau en mousse est basé sur des tanins de flavonoïde.

3. Pneumatique selon la revendication 2, **caractérisé en ce que** ledit matériau en mousse est préparé en partant de tanins de flavonoïde, d'alcool furfurylique, d'un agent moussant et d'un catalyseur.

4. Pneumatique selon l'une quelconque des revendications précédentes, **caractérisé en ce que** ledit matériau en mousse est sans formaldéhyde.

5. Pneumatique selon l'une quelconque des revendications précédentes, **caractérisé en ce que** ledit matériau en mousse a une masse volumique allant de 10 kg/m³ à 250 kg/m³ (de 0,01 g/cm³ à 0,25 g/cm³).

6. Pneumatique selon l'une quelconque des revendications précédentes, **caractérisé en ce que** ledit matériau en mousse occupe un volume allant de 0,1 % à 100 % du volume de la cavité interne.

7. Pneumatique selon la revendication 6, **caractérisé en ce que** ledit matériau en mousse a une épaisseur allant de 10 mm à 200 mm et une largeur allant de 10 % à 100 % de la largeur de la cavité interne.

8. Pneumatique selon l'une quelconque des revendications précédentes, **caractérisé en ce que** ledit matériau en mousse occupe un volume allant de 0,4 % à 20 % du volume de la cavité interne.

9. Pneumatique selon la revendication 8, **caractérisé en ce que** ledit matériau en mousse a une épaisseur allant de 20 mm à 30 mm et une largeur allant de 20 % à 40 % de la largeur de la cavité interne.

10. Pneumatique selon l'une quelconque des revendications précédentes, **caractérisé en ce que** ledit matériau en mousse est logé sur une surface de la couche imperméable de la cavité interne dudit pneumatique.

11. Pneumatique selon l'une quelconque des revendications précédentes, **caractérisé en ce que** ledit matériau en mousse est logé dans la cavité sous la forme d'un tore, ou sous la forme d'une bande avec une longueur égale à celle de la couche imperméable, ou sous la forme de segments uniques assemblés de façon à couvrir la longueur entière de la couche imperméable.
